# DEMANDE DE BREVET EUROPEEN

(11) **EP 4 763 652 A1**
(43) Date de publication de la demande: **24.06.2026**
(21) Numéro de dépôt: 25222358.1
(22) Date de dépôt: 10.12.2025
(51) Int. Cl.: B60W 50/08, G01C 21/34, G06F 16/2457, G08G 1/16, G01C 21/36, G08G 1/0962, G08G 1/0965

(54) **PROCÉDÉ DE GESTION D'UNE INTERFACE DANS UN VÉHICULE AUTOMOBILE**

(30) Priorité: 18.12.2024 FR 2414419
(71) Demandeur: AMPERE s.a.s., 92100 Boulougne-Billancourt (FR)
(72) Inventeur: ARMAND, Alexandre, 78084 GUYANCOURT (FR); GANDREZ, Clara, 78084 GUYANCOURT (FR); JAKNI, Taha, 78084 GUYANCOURT (FR)
(74) Mandataire: Renault Group

(57) **Abrégé**

Procédé de gestion d'au moins une interface (41) dans un véhicule automobile (100), l'interface (41) étant configurée pour alerter un conducteur du véhicule automobile (100) lorsqu'une situation de conduite présente un niveau de risque supérieur à un seuil de risque prédéterminé (Sr), le procédé étant caractérisé en ce qu'il comprend les étapes suivantes :
- Une étape de collection (E01) de données représentatives d'une complexité d'une situation de conduite à un instant donné, notamment en temps réel ;
- Une étape de détermination (E02, E03, E04, E05) d'une valeur représentative de la complexité de la situation de conduite rencontrée ;
- Une étape de comparaison (E06) de la valeur extraite à un seuil de complexité prédéterminé (Sc) ;
- Une étape d'inhibition (E07) de l'au moins une interface (41) tant que la valeur représentative de la complexité globale de la situation de conduite rencontrée est supérieure ou égale au seuil de complexité prédéterminé.

## Description

L'invention concerne un procédé de gestion d'une interface dans un véhicule automobile. L'invention concerne également un système d'aide à la conduite pour un véhicule automobile, le système d'aide à la conduite mettant en œuvre le procédé mentionné. L'invention concerne par ailleurs un véhicule automobile comprenant un tel système d'aide à la conduite. L'invention concerne en outre un produit programme d'ordinateur mettant en œuvre le procédé mentionné. L'invention concerne également un support d'enregistrement de données sur lequel est enregistré un tel programme. L'invention concerne par ailleurs une signal d'un tel support de données.

Un conducteur d'un véhicule automobile est constamment amené à prendre des décisions relatives à la complexité de la situation de conduite rencontrée au cours de son trajet. Il est donc primordial pour le conducteur d'avoir une vision globale de la situation de conduite en temps réel pour en évaluer la complexité, mais aussi de comprendre comment cette complexité peut évoluer dans un futur proche.

D'une façon générale, la complexité d'une situation de conduite désigne la quantité de facteurs et de variables qui interviennent dans une situation de conduite. Ces facteurs peuvent affecter la sécurité du conducteur et/ou celle de son entourage, notamment les autres usagers de la route. Il existe diverses méthodes et divers dispositifs qui permettent d'estimer le niveau de complexité d'une situation. Ces méthodes et dispositifs peuvent être utilisés pour avertir le conducteur par l'intermédiaire de diverses interfaces afin d'éviter une prise de risque.

Cependant, lorsqu'une situation de conduite devient trop complexe, le flot d'informations communiquées par le système d'assistance risque de déranger le conducteur, car son attention est alors sollicitée de toute part, aussi bien par la situation de conduite rencontrée que par les messages d'alerte envoyés par la ou les interfaces.

Le but de l'invention est de remédier aux inconvénients décrits ci-dessus en proposant un système d'aide à la conduite qui permet d'évaluer la complexité d'une situation de conduite, de prédire l'évolution de cette complexité et de déterminer un ou plusieurs types d'assistance au conducteur pour l'avertir de ladite complexité, sans surcharger cognitivement le conducteur lorsqu'un seuil de complexité est franchi.

A cet effet, l'invention porte sur un procédé de gestion d'au moins une interface dans un véhicule automobile, l'interface étant configurée pour alerter un conducteur du véhicule automobile lorsqu'une situation de conduite présente un niveau de risque supérieur à un seuil de risque prédéterminé, le procédé étant caractérisé en ce qu'il comprend les étapes suivantes :
- Une étape de collection de données représentatives d'une complexité d'une situation de conduite à un instant donné, notamment en temps réel ;
- Une étape de détermination d'une valeur représentative de la complexité de la situation de conduite rencontrée ;
- Une étape de comparaison de la valeur extraite à un seuil de complexité prédéterminé ;
- Une étape d'inhibition de l'au moins une interface tant que la valeur représentative de la complexité globale de la situation de conduite rencontrée est supérieure ou égale au seuil de complexité prédéterminé.

Selon un mode de réalisation, l'étape de détermination d'une valeur représentative de la complexité de la situation de conduite rencontrée comprend :
- une étape de classification des données collectées dans au moins deux catégories distinctes,
- une étape d'affectation d'un indice de complexité à chaque catégorie,
- une étape d'agrégation des indices de complexité dans un tableau,
- une étape d'extraction à partir dudit tableau d'une valeur représentative de la complexité globale de la situation de conduite rencontrée.

Selon un mode de réalisation, l'étape de collection de données comprend une sous-étape au cours de laquelle un indice de fiabilité est affecté aux données collectées.

Selon un mode de réalisation, les données auxquelles un indice de fiabilité inférieur à une valeur seuil a été affecté sont exclues de l'étape de détermination.

Selon un mode de réalisation, l'étape de collection de données comprend une sous-étape d'échange avec une base de données d'accidentologie et au cours de l'étape de classification des données, les informations issues de ladite base de données sont classées dans une catégorie propre à l'accidentologie.

Selon un mode de réalisation, l'étape d'affectation d'un indice de complexité à chaque catégorie comprend une sous-étape de prédiction de l'évolution de la complexité globale sur un horizon de temps.

Selon un mode de réalisation, l'étape d'extraction d'une valeur représentative de la complexité globale comprend une sous-étape d'identification de la valeur maximale des composantes du tableau et/ou une sous-étape de calcul de la moyenne des composantes du tableau

Selon un mode de réalisation, l'étape d'inhibition comprend une sous-étape d'enregistrement dans une mémoire électronique locale des données relatives à une situation de conduite pour laquelle le niveau de complexité est supérieur à la valeur seuil prédéterminée pour la complexité.

L'invention porte également sur un système d'aide à la conduite pour un véhicule automobile, le système comprenant des éléments matériels et/ou logiciels mettant en œuvre le procédé mentionné précédemment, notamment des éléments matériels et/ou logiciels conçus pour mettre en œuvre le procédé mentionné précédemment.

Selon un mode de réalisation, les éléments matériels et/ou logiciels du système d'aide à la conduite comprennent :
- un module d'estimation du risque encouru pour une situation de conduite rencontrée par le véhicule automobile,
- un module d'estimation de la complexité de la situation de conduite,
- un module de gestion d'au moins une interface, et
- au moins une interface,
- optionnellement, une mémoire électronique locale.

Selon un mode de réalisation, les éléments matériels et/ou logiciels du système d'aide à la conduite comprennent en outre un module de prédiction de situation configuré pour prédire la situation de conduite pour différents horizons de temps.

L'invention porte également sur un véhicule automobile caractérisé en ce qu'il comprend un système d'aide à la conduite tel que décrit précédemment.

L'invention porte également sur un produit programme d'ordinateur comprenant des instructions de code de programme enregistrées sur un support lisible par ordinateur pour mettre en œuvre les étapes du procédé mentionné précédemment lorsque ledit programme fonctionne sur un ordinateur, ou sur un produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé mentionné précédemment.

L'invention porte également sur un support d'enregistrement de données, lisible par un ordinateur, sur lequel est enregistré un programme d'ordinateur comprenant des instructions de code de programme de mise en œuvre du procédé mentionné précédemment, ou sur un support d'enregistrement lisible par ordinateur comprenant des instructions qui, lorsqu'elles sont exécutées par un ordinateur, conduisent celui-ci à mettre en œuvre le procédé mentionné précédemment.

L'invention porte également sur un signal d'un support de données portant le produit programme d'ordinateur mentionné précédemment.

Ces objets, caractéristiques et avantages de la présente invention seront exposés en détail dans la description suivante d'un mode de réalisation particulier fait à titre non-limitatif en relation avec les figures jointes parmi lesquelles :
La [Fig.1] illustre schématiquement un système d'aide à la conduite selon l'invention.
La [Fig.2] illustre graphiquement les évolutions du risque et de la complexité en fonction du temps.
La [Fig.3] représente un ordinogramme d'un mode d'exécution d'un procédé de gestion.

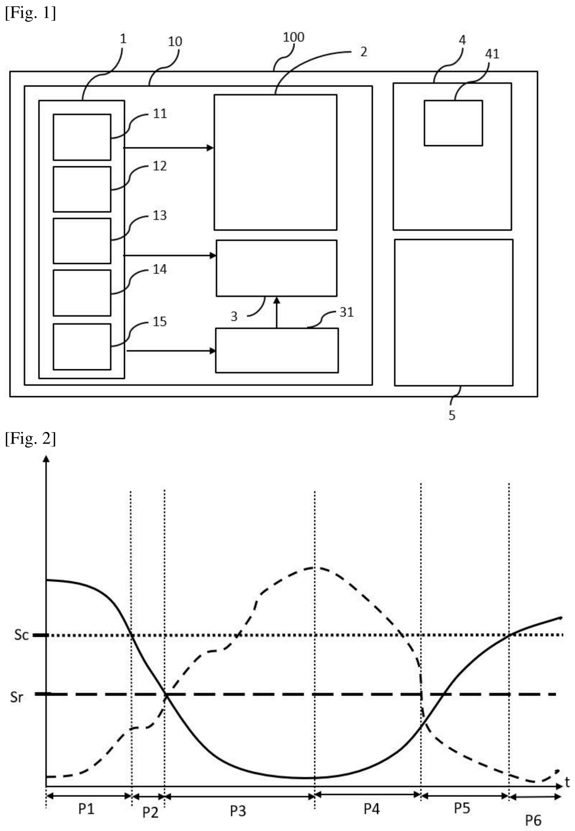

Un exemple d'un véhicule automobile 100 équipé d'un mode de réalisation d'un système d'aide à la conduite 10 est décrit ci-dessous en référence à la [Fig.1], faite à titre non limitatif.

Le système d'aide à la conduite 10 comprend divers moyens de perception 1 de l'environnement du véhicule qui peuvent comprendre tout ou partie des moyens suivants :
- des moyens d'observation 11 de l'état du véhicule, et/ou
- des moyens de perception 12 de l'environnement proche du véhicule, et/ou
- des moyens de géolocalisation 13 du véhicule, et/ou
- des moyens de communication 14 du véhicule avec une infrastructure routière et/ou avec d'autres véhicules, et/ou
- des moyens 15 de connexion à internet.

Les moyens d'observation 11 de l'état du véhicule peuvent comprendre un moyen d'observation d'un réseau de données internes au véhicule, par exemple de type bus CAN. Les données transmises via le réseau de données internes peuvent comprendre par exemple des mesures instantanées de vitesse et/ou accélération et/ou jerk du véhicule automobile, ou encore l'angle et la vitesse de rotation du volant, l'état des pédales de frein ou d'accélération, etc.

Les moyens de perception 12 de l'environnement proche du véhicule peuvent comprendre des radars et/ou des lidars et/ou des caméras. D'autres modes de réalisation des moyens de perception 12 sont envisageables.

Les moyens de géolocalisation 13 du véhicule peuvent comprendre une carte de navigation numérique et des données issues d'un système de localisation, par exemple de type GPS, permettant au conducteur de localiser son véhicule automobile sur la carte de navigation numérique, et donc d'accéder à des informations relatives au réseau routier, notamment à une description topologique et géométrique du réseau routier. Les informations relatives au réseau routier peuvent en outre comprendre des informations sémantiques. Il peut s'agir par exemple de la présence d'un panneau indiquant une règle à suivre sur une portion de route (vitesse maximale, interdiction de doubler), ou d'un panneau indiquant la présence d'un danger (risque d'animaux, d'éboulements, ...).

Les moyens de communication 14 du véhicule avec une infrastructure routière et/ou avec d'autres véhicules permettent également d'obtenir des données sur un ensemble d'objets perçus par les équipements d'infrastructure routière et/ou les autres véhicules. Les données comprennent notamment des données de classification des objets et leurs dimensions, leur position ainsi que les vitesses associées.

Les moyens 15 de connexion à internet permettent par ailleurs d'obtenir des données contextuelles telles que la météo, l'état des routes et l'état du trafic, etc.

Lorsqu'il est utilisé par un conducteur, le véhicule automobile 100 est amené à se déplacer dans un environnement donné. Au cours de ses déplacements, le conducteur du véhicule automobile 100 est amené à rencontrer diverses situations de conduite qui relèvent d'un certain niveau de complexité.

D'une manière générale, la complexité globale d'une situation de conduite comporte une composante statique et une composante dynamique. Plus précisément, la composante statique fait référence à des éléments statiques de l'environnement, tels que les infrastructures routières et les conditions météorologiques, tandis que la composante dynamique fait référence aux éléments dynamiques de l'environnement, tels que les autres usagers de la route. La complexité statique peut être estimée bien en amont, le véhicule n'ayant pas nécessairement besoin d'être sur place pour disposer des données d'entrée. L'estimation de la complexité dynamique, en revanche, nécessite la présence du véhicule à l'endroit dont il s'agit d'en estimer la complexité.

Indépendamment de la notion de complexité, la notion de risque doit également être prise en compte pour assister un conducteur d'un véhicule automobile 100 dans sa prise de décision face à une situation de conduite.

Dans cette optique, le système d'aide à la conduite 10 du véhicule 100 comprend en outre un module d'estimation du risque 2 encouru pour une situation de conduite rencontrée par le conducteur du véhicule automobile. A partir des données collectées par les moyens de perception 1 de l'environnement du véhicule automobile 100, le module d'estimation du risque 2 est en mesure d'estimer le risque encouru pour une situation de conduite. Il peut par exemple évaluer les positions et/ou les vitesses et/ ou les trajectoires empruntées par d'autres usagers de la route, détecter la distance qui sépare le véhicule automobile 100 d'un élément dans l'environnement dudit véhicule 100 et estimer le temps restant avant une potentielle collision avec cet élément. Le module d'estimation du risque 2 est également configuré pour prédire l'évolution du risque encouru sur un horizon de temps. On entend ici par « horizon de temps » un intervalle de temps d'une durée prédéterminée. Un horizon de temps pour une prédiction effectuée par le module d'estimation du risque 2 concernant l'évolution du risque est par exemple compris entre une et dix secondes.

Le système d'aide à la conduite 10 comprend également un module d'estimation de la complexité 3, ce module 3 reçoit lui aussi les données collectées par les divers moyens de perception 1 et les interprète pour en extraire les informations pertinentes pour estimer la complexité de la situation de conduite rencontrée par le conducteur du véhicule automobile 100.

Afin d'assister le conducteur dans sa prise de décision face aux situations de conduite rencontrées sur son trajet, le véhicule automobile 100 est généralement équipé d'une ou de plusieurs interfaces 41 configurées pour alerter le conducteur du véhicule automobile 100 lorsqu'une situation de conduite présente un niveau de risque trop élevé. Un risque élevé relatif à une situation de conduite peut prendre une multitude de formes, telles qu'une vitesse de déplacement trop élevée, une distance trop faible entre le véhicule et un obstacle environnant, une chaussée glissante, une visibilité réduite, etc.

Une telle interface 41 est notamment configurée pour alerter le conducteur via un moyen d'alerte tel qu'un moyen visuel (lumière clignotante, ...) et/ou un moyen auditif (émission d'un son plus ou moins fort) et/ou un moyen haptique (pédales qui vibrent, volant qui vibre, ...) lorsqu'une situation de conduite présente un niveau de risque supérieur à un seuil de risque prédéterminé Sr. Ces moyens d'alertes peuvent être combinés entre eux. L'intensité de l'alerte émise peut dépendre du niveau de risque encouru et/ou du temps qu'il reste avant que le véhicule n'entre en collision avec un obstacle.

Pour ce faire, le système d'aide à la conduite 10 comprend un module de gestion d'interface 4 permettant de coordonner la ou les interfaces 41 présentes dans le véhicule automobile en fonction du niveau de complexité estimé et prédit et en fonction du niveau de risque estimé et prédit.

Dans le cadre de cette invention, le niveau de risque n'est pas pris en compte pour évaluer la complexité d'une situation de conduite. Cependant, le niveau de risque est pris en compte pour estimer le meilleur moment pour alerter le conducteur, c'est-à-dire le meilleur moment pour actionner une ou plusieurs interface 41 via le module de gestion d'interface 4 afin d'envoyer une ou plusieurs alertes le cas échéant. Le niveau de risque est également pris en compte par le gestionnaire d'interface 4 lors du choix de l'interface 41 utilisée en cas d'alerte.

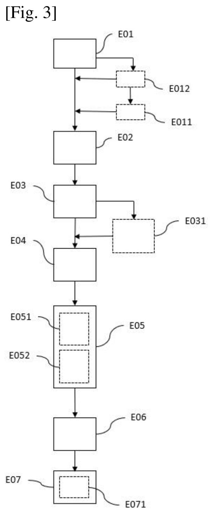

Un mode d'exécution d'un procédé de gestion d'au moins une interface 41 dans un véhicule automobile 1 est décrit ci-après en référence aux figures 2 et 3. Le procédé permet d'éviter une surcharge cognitive chez un conducteur d'un véhicule automobile lorsque la complexité d'une situation de conduite rencontrée par ledit conducteur est particulièrement élevée. Le procédé est exécuté par le système d'aide à la conduite 10 du véhicule automobile. Le procédé peut donc être également vu comme un procédé de fonctionnement d'un système d'aide à la conduite ou comme un procédé de fonctionnement d'un véhicule.

Une première étape E01 du procédé consiste à collecter des données représentatives d'une complexité d'une situation de conduite à l'aide des moyens de perception 1 précités. Cette collecte de données se fait notamment en temps réel par les moyens de perception 1 qui transmettent ensuite ces données au module d'estimation de la complexité 3 et au module d'estimation du risque 2.

Optionnellement, le procédé peut comprendre une sous-étape E011 au cours de laquelle un indice de fiabilité est affecté aux données collectées. Cet indice de fiabilité peut être déterminé en fonction de la cohérence entre des données fournies par un premier moyen de perception et un deuxième moyen de perception distinct du premier moyen de perception. Cette sous-étape E011 peut être effectuée directement par les moyens de perception 1, ou plus généralement par le système d'aide à la conduite 10 du véhicule automobile.

Le procédé passe ensuite à une deuxième étape de classification E02 des données collectées dans au moins deux catégories distinctes : une première catégorie regroupe les éléments statiques, tels que les infrastructures de conduite présentes sur un itinéraire du véhicule, tandis qu'une deuxième catégorie regroupe les éléments dynamiques, tels que les autres usagers de la route. Cette classification peut être effectuée par le module d'estimation de la complexité 3 en temps réel, ou bien elle peut être effectuée en amont.

Le module d'estimation de la complexité 3 peut être configuré pour classer les données dans plus de deux catégories. Autrement dit, le module d'estimation de la complexité 3 peut proposer une pluralité de catégories. De manière générale, une catégorie permet des regrouper les éléments partageant des attributs communs. L'on peut par exemple définir une catégorie qui regroupe les caractéristiques de la route dans laquelle sont répertoriées les données concernant le nombre de voies, le sens de circulation, etc. une autre catégorie qui regroupe les caractéristiques concernant les potentielles interactions, comme la présence d'intersection, de voies de bus, de voies cyclables, de passage piéton, etc. Une autre catégorie peut rassembler les facteurs temporels, tels que la date, l'heure, la température extérieure, ou encore d'autres éléments météorologiques.

Optionnellement, une catégorie peut être dédiée à l'accidentologie. Dans ce mode de réalisation optionnel, la première étape de collection E01 de données comprend une autre sous-étape d'échange E012 avec une base de données d'accidentologie. Cette sous-étape d'échange E012 avec une base de données d'accidentologie est distincte de la sous-étape E011 au cours de laquelle un indice de fiabilité est affecté aux données collectées. La sous-étape d'échange E012 avec une base de données d'accidentologie est par exemple mise en œuvre avant la sous-étape E011 Lors de la mise en œuvre du procédé, les informations issues de cette base de données sont par exemple classées dans une catégorie propre à l'accidentologie au cours de la deuxième étape de classification E02.

Une fois la classification effectuée, le procédé passe à une troisième étape d'affectation E03 d'un indice de complexité à chaque catégorie. Cette étape est mise en œuvre par le module d'estimation de la complexité 3. L'indice de complexité est un scalaire qui reflète le niveau de complexité lié aux éléments présents dans la catégorie. Il est notamment strictement supérieur à zéro et inférieur ou égal à un. Une valeur faible de l'indice de complexité reflète un niveau de complexité relativement bas tandis qu'une valeur élevée de l'indice de complexité reflète un niveau de complexité plus élevé. Le calcul de l'indice de complexité pour une catégorie peut être effectué à l'aide d'un modèle mathématique ou à l'aide d'une méthode de type réseaux de neurones, cette méthode pouvant être basée sur l'apprentissage.

Dans le cas où le système prévoit une catégorie spécifique à l'accidentologie, l'indice de complexité peut être minimal si aucun accident n'est référencé pour le trajet ou du moins une portion de trajet emprunté par le véhicule automobile. Dans le cas où un ou plusieurs accidents sont référencés dans une base de données pour le trajet ou du moins une portion de trajet emprunté par le véhicule automobile, l'indice de complexité peut par exemple varier en fonction de la date d'occurrence de l'accident, de sa gravité, ou d'autres attributs.

Lorsqu'un indice de complexité a été affecté à chacune des catégories considérées, le procédé passe à une quatrième étape d'agrégation E04 des indices de complexité dans un tableau. Ce tableau peut par exemple prendre la forme d'une colonne dans laquelle le nombre de lignes correspond au nombre de catégories considérées. Une telle représentation des indices de complexité calculés permet de faciliter l'identification de la ou des sources principales de complexité, ce qui peut avoir un impact sur le type d'avertissement et/ou le type d'interface 41 choisi pour alerter le conducteur le cas échéant. La quatrième étape d'agrégation E04 des indices de complexité dans un tableau est notamment mise en œuvre par le module d'estimation de la complexité 3.

Dans le cas où la première étape de collection E01 de données du procédé comprend la sous-étape E011 au cours de laquelle un indice de fiabilité est affecté aux données collectées, les données auxquelles un indice de fiabilité inférieur à une valeur seuil a été affecté sont exclues de la quatrième étape d'agrégation E04. De cette façon, les données aberrantes et/ou obsolètes ne sont pas prises en compte dans l'évaluation de la complexité.

La troisième étape d'affectation E03 du procédé peut comprendre une sous-étape de prédiction E031 de l'évolution de la complexité sur un horizon de temps. L'horizon de temps pour la prédiction de l'évolution de la complexité dynamique est plus court que l'horizon de temps pour la prédiction de l'évolution de la complexité statique. Plus précisément, à partir des données collectées en temps réel et des données déjà disponibles, mais qui concernent un événement futur, une prédiction de l'évolution de la complexité peut être établie à court terme (quelques secondes à quelques minutes), voire à moyen terme (quelques dizaines de minutes à quelques heures, par exemple deux heures). La prédiction de l'évolution de la complexité à court terme peut tenir compte de la complexité statique et de la complexité dynamique. En revanche, la prédiction de l'évolution de la complexité à long terme ne peut tenir compte que de la complexité statique, puisque les données concernant la complexité dynamique ne seront présentes qu'à partir du moment où le véhicule sera présent sur les lieux.

Au cours de cette sous-étape de prédiction E031 de l'évolution de la complexité, le tableau évoqué précédemment peut être complété avec des colonnes supplémentaires : chaque colonne représente alors un moment temporel distinct. La première colonne du tableau répertorie les indices de complexité des différentes catégories calculés en temps réel pour un instant t0, la deuxième colonne du tableau répertorie les indices de complexité pour ces mêmes catégories pour un temps t0+Δt, la troisième colonne du tableau répertorie les indices de complexité pour ces mêmes catégories pour un temps t0+2*Δt, etc.

Selon un mode de réalisation, le système d'aide à la conduite 10 peut comprendre un module de prédiction de situation 31. Le module de prédiction de situation 31 est configuré pour prédire la situation de conduite pour différents horizons de temps, puis le module d'estimation de complexité 3 estime la complexité pour chacun de ces horizons de temps. Dans ce mode de réalisation, le module de prédiction de situation 31 et le module d'estimation de complexité 3 sont coordonnés pour exécuter ensemble la sous-étape de prédiction E031.

La sous-étape de prédiction E031 peut avoir recours à une ou plusieurs méthodes mathématiques qui, à partir des données collectées précédemment, peuvent permettre d'estimer l'évolution de la complexité des situations routières prochainement rencontrées par le conducteur du véhicule automobile.

Le procédé passe ensuite à une cinquième étape d'extraction E05 d'une valeur représentative de la complexité globale de la situation de conduite rencontrée par le conducteur automobile à un instant donné, notamment en temps réel. La cinquième étape d'extraction E05 peut être effectuée par le module d'estimation de la complexité 3.

Selon un mode de réalisation, cette cinquième étape d'extraction E05 d'une valeur représentative de la complexité globale comprend une sous-étape d'identification E051 de la valeur maximale des composantes du tableau. Cette sous-étape E051 consiste alors à identifier l'indice de complexité ayant la valeur la plus élevé dans le tableau.

En complément ou alternativement, la cinquième étape d'extraction E05 d'une valeur représentative de la complexité globale peut comprendre une sous-étape de calcul E052 de la moyenne des composantes du tableau. Cette sous-étape E052 consiste par exemple à calculer une moyenne pondérée des composantes du tableau. D'autres méthodes, notamment des méthodes mathématiques, peuvent être envisagées pour extraire au moins une valeur représentative de la complexité globale à partir du tableau.

Les deuxième, troisième, quatrième, cinquième étapes E02, E03, E04, E05, et éventuellement la sous-étape E031 constituent ensemble une étape de détermination d'une valeur représentative de la complexité de la situation de conduite rencontrée.

Le procédé passe ensuite à une sixième étape de comparaison E06 de la valeur extraite à un seuil de complexité prédéterminé Sc. Le seuil de complexité prédéterminé Sc est par exemple un scalaire. Il est notamment strictement supérieur à zéro et inférieur ou égal à un. Ce seuil de complexité prédéterminé Sc représente un niveau de complexité qui sollicite une partie majeure de l'attention du conducteur. Au-delà de ce seuil de complexité, toute distraction sollicitant l'attention du conducteur est indésirable. La sixième étape de comparaison E06 de la valeur extraite à un seuil de complexité prédéterminé Sc peut être mise en œuvre par le module d'estimation de la complexité 3.

Tant que la valeur représentative de la complexité globale de la situation de conduite rencontrée par le conducteur automobile est inférieure au seuil de complexité prédéterminé Sc, la ou les interfaces 41 peuvent être actionnées par le module de gestion d'interface 4 pour prévenir le conducteur d'un risque imminent et/ou d'une augmentation de la complexité de la situation de conduite dans un futur proche.

Toutefois, dès que cette valeur représentative de la complexité globale est supérieure ou égale au seuil de complexité prédéterminé Sc, le procédé passe à une septième étape E07 au cours de laquelle la ou les interfaces 41 dans le véhicule automobile sont inhibées. Cette septième étape d'inhibition E07 est mise en œuvre par le module de gestion d'interface 4. En particulier, le module de gestion d'interface 4 n'actionne pas la ou les interfaces 41 tant que la valeur représentative de la complexité globale est supérieure ou égale au seuil de complexité prédéterminé Sc. Ainsi, lorsque la complexité globale d'une situation de conduite est trop élevée, la ou les interfaces 41 ne sollicitent plus le conducteur, et ce indépendamment du niveau de risque associé à la situation de conduite rencontrée, dans le but de ne pas surcharger cognitivement le conducteur.

Selon un mode de réalisation préférentiel, la septième étape d'inhibition E07 de la au moins une interface 41 comprend une sous-étape d'enregistrement E071 dans une mémoire électronique locale 5 des données relatives à une situation de conduite pour laquelle le niveau de complexité est supérieur à la valeur seuil prédéterminée Sc pour la complexité.

Dans ce mode de réalisation préférentiel, le système d'aide à la conduite 10 comprend une mémoire électronique locale 5 configurée pour exécuter la sous-étape d'enregistrement E071 évoquée précédemment. Les données enregistrées dans la mémoire électronique locale 5 peuvent par exemple être des images et/ou des données de géolocalisation. Ces données peuvent être horodatées et/ou géolocalisées. La mémoire électronique locale 5 peut être interrogée par le conducteur lorsqu'il est cognitivement disponible. Le système d'aide à la conduite 10 peut alors restituer les données enregistrées dans la mémoire électronique locale 5 et les présenter au conducteur, notamment via la au moins une interface 41. Le système d'aide à la conduite 10 peut aussi fournir des explications sur les risques encourus au moment de la situation enregistrée et/ou sur la complexité rencontrée. Le système d'aide à la conduite 10 peut par exemple fournir au conducteur des conseils pour limiter la prise de risque dans des situations similaires et/ou proposer des comportements alternatifs à celui adopté par le conducteur au moment où la situation s'est produite pour éviter une augmentation du risque dans des situations similaires à l'avenir.

La [Fig.2] illustre graphiquement un exemple de l'évolution du niveau de complexité et de l'évolution du risque en fonction du temps. Sur cette [Fig.2], une première ligne horizontale représente la valeur seuil prédéterminée Sr pour le risque et une deuxième ligne horizontale, localisée au-dessus de la première ligne horizontale, représente la valeur seuil prédéterminée Sc pour la complexité. Sur cette même [Fig.2], une courbe en trait plein représente l'évolution au fil du temps de la valeur représentative de la complexité globale de la situation de conduite rencontrée ; et une courbe en pointillés représente l'évolution du niveau de risque au fil du temps.

Au cours d'une première période P1, le risque estimé pour la situation de conduite est largement inférieur à la valeur seuil prédéterminé Sr pour le risque, il n'y a donc pas de nécessité d'envoyer une alerte au conducteur par l'intermédiaire d'une ou de plusieurs interfaces 41. Dans cette même période P1, la complexité calculée est supérieure à la valeur seuil prédéterminée Sc pour la complexité, la ou les interfaces 41 sont donc inhibées : aucune alerte n'est envoyée au conducteur afin d'éviter une surcharge cognitive tant que la valeur représentative de la complexité globale de la situation de conduite rencontrée par le conducteur automobile reste supérieure au seuil de complexité prédéterminé Sc. Notons toutefois que vers la fin de la première période P1, le niveau de complexité décroit progressivement, tandis que le niveau de risque augmente, tout en restant inférieur à la valeur seuil prédéterminé Sr pour le risque.

Au moment où la complexité calculée passe en-dessous de la valeur seuil prédéterminée Sc pour la complexité, la ou les interfaces 41 du véhicule automobile ne sont plus inhibées, ceci marque le début d'une période P2. Au cours de cette deuxième période P2, les valeurs représentatives de la complexité globale calculées par le module d'estimation de complexité 3 se situent en-dessous de la valeur seuil prédéterminée pour la complexité, il en est de même pour le niveau de risque estimé par le module d'estimation du risque 2 ; le niveau de risque estimé reste inférieur à la valeur seuil prédéterminé Sr pour le risque. Notons toutefois que vers la fin de la deuxième période P2, le niveau de risque croit assez rapidement. La ou les interfaces 41 peuvent alors être utilisées pour envoyer des alertes au conducteur, notamment pour le prévenir de l'augmentation du risque encouru.

Au moment où la valeur du niveau de risque dépasse la valeur seuil prédéterminée pour le risque, une troisième période P3 commence au cours de laquelle une ou plusieurs alertes sont envoyées au conducteur via une ou plusieurs interfaces 41. Le niveau de risque est pris en compte par le gestionnaire d'interface 4 lors du choix de l'interface 41 utilisée pour alerter le conducteur. L'intensité des alertes peut croître avec le niveau de risque qui continue d'augmenter au cours de cette troisième période P3. Pendant cette période P3, le niveau de complexité diminue progressivement et atteint une valeur minimale à la fin de la période P3.

Une quatrième période P4 commence au moment où le niveau de risque, bien qu'élevé, commence à stagner, avant de diminuer progressivement jusqu'à atteindre la valeur seuil prédéterminé Sr pour le risque. Pendant cette période P4, le module de gestion d'interface 4 continue de gérer la ou les interfaces pour alerter le conducteur, toutefois la fréquence et/ou l'intensité des alertes peut diminuer, à l'image du niveau du risque estimé par le module d'estimation de risque 2. Au cours de cette quatrième période P4, le niveau de complexité croît tout en restant inférieure à la valeur seuil prédéterminé pour la complexité.

Une cinquième période P5 commence au moment où le niveau de risque passe en-dessous de la valeur seuil prédéterminé Sr pour le risque. Au cours de cette période P5, le niveau de complexité continue d'augmenter jusqu'à ce qu'il atteigne la valeur seuil prédéterminé Sc pour la complexité. Au cours de cette période P5 le module de gestion d'interface 4 peut gérer la ou les interfaces 41 pour alerter le conducteur de l'augmentation de la complexité.

Le début de la dernière période P6 de l'exemple illustré sur cette [Fig.2] est marquée par le niveau de complexité qui dépasse la valeur seuil prédéterminée Sc pour la complexité : la ou les interfaces 41 sont de nouveau inhibées.

L'on peut également considérer un cas non illustré sur la [Fig.2], cas dans lequel le niveau de complexité et le niveau de risque sont tous les deux supérieurs à leur valeur seuil respectives. Dans ce cas particulier, la ou les interfaces 41 sont inhibées : aucune alerte n'est envoyée au conducteur afin d'éviter une surcharge cognitive tant que la valeur représentative de la complexité globale de la situation de conduite rencontrée par le conducteur automobile reste supérieure au seuil de complexité prédéterminé Sc, et ce malgré le niveau de risque qui est également élevé et en particulier supérieur à la valeur seuil prédéterminé Sr pour le risque.

Selon un mode de réalisation préférentiel, le système d'aide à la conduite 10 a accès à une ou plusieurs bases de données. Le système d'aide à la conduite 10 comprend par exemple des moyens de communications configurés pour interroger la ou les bases de données et recevoir des réponses. Ces moyens de communications peuvent également être configurés pour échanger des données entre la base de données et le système d'aide à la conduite 10, notamment pour mettre à jour les données contenues par la base de données.

## Revendications

1. Procédé de gestion d'au moins une interface (41) dans un véhicule automobile (100), l'interface (41) étant configurée pour alerter un conducteur du véhicule automobile (100) lorsqu'une situation de conduite présente un niveau de risque supérieur à un seuil de risque prédéterminé (Sr), le procédé étant **caractérisé en ce qu'**il comprend les étapes suivantes :
- Une étape de collection (E01) de données représentatives d'une complexité d'une situation de conduite à un instant donné, notamment en temps réel ;
- Une étape de détermination (E02, E03, E04, E05) d'une valeur représentative de la complexité de la situation de conduite rencontrée ;
- Une étape de comparaison (E06) de la valeur extraite à un seuil de complexité prédéterminé (Sc) ;
- Une étape d'inhibition (E07) de l'au moins une interface (41) tant que la valeur représentative de la complexité globale de la situation de conduite rencontrée est supérieure ou égale au seuil de complexité prédéterminé (Sc).

2. Procédé selon la revendication précédente, **caractérisé en ce que** l'étape de détermination (E02, E03, E04, E05) d'une valeur représentative de la complexité de la situation de conduite rencontrée comprend :
- une étape de classification (E02) des données collectées dans au moins deux catégories distinctes,
- une étape d'affectation (E03) d'un indice de complexité à chaque catégorie,
- une étape d'agrégation (E04) des indices de complexité dans un tableau,
- une étape d'extraction (E05) à partir dudit tableau d'une valeur représentative de la complexité globale de la situation de conduite rencontrée.

3. Procédé selon l'une des revendications précédentes, **caractérisé en ce que** l'étape de collection (E01) de données comprend une sous-étape (E011) au cours de laquelle un indice de fiabilité est affecté aux données collectées.

4. Procédé selon la revendication précédente, **caractérisé en ce que** les données auxquelles un indice de fiabilité inférieur à une valeur seuil a été affecté sont exclues de l'étape de détermination (E02, E03, E04, E05).

5. Procédé selon l'une des revendications précédentes, **caractérisé en ce que** l'étape de collection (E01) de données comprend une sous-étape d'échange (E012) avec une base de données d'accidentologie et **en ce qu'**au cours de l'étape de classification (E02) des données, les informations issues de ladite base de données sont classées dans une catégorie propre à l'accidentologie.

6. Procédé selon l'une des revendications précédentes et la revendication 2, **caractérisé en ce que** l'étape d'affectation (E03) d'un indice de complexité à chaque catégorie comprend une sous-étape de prédiction (E031) de l'évolution de la complexité globale sur un horizon de temps.

7. Procédé selon l'une des revendications précédentes et la revendication 2, **caractérisé en ce que** l'étape d'extraction (E05) d'une valeur représentative de la complexité globale comprend une sous-étape d'identification (E051) de la valeur maximale des composantes du tableau et/ou une sous-étape de calcul (E052) de la moyenne des composantes du tableau.

8. Procédé selon l'une des revendications précédentes, **caractérisé en ce que** l'étape d'inhibition (E07) comprend une sous-étape d'enregistrement (E071) dans une mémoire électronique locale (5) des données relatives à une situation de conduite pour laquelle le niveau de complexité est supérieur à la valeur seuil prédéterminée (Sc) pour la complexité.

9. Système d'aide à la conduite (10) pour un véhicule automobile, le système comprenant des éléments (2, 3, 4) matériels et/ou logiciels mettant en œuvre le procédé selon l'une des revendications 1 à 8, notamment des éléments matériels (2, 3, 4) et/ou logiciels conçus pour mettre en œuvre le procédé selon l'une des revendications précédentes.

10. Système d'aide à la conduite (10) selon la revendication précédente, **caractérisé en ce que** les éléments (2, 3, 4) matériels et/ou logiciels comprennent :
- un module d'estimation du risque (2) encouru pour une situation de conduite rencontrée par le véhicule automobile,
- un module d'estimation de la complexité (3) de la situation de conduite,
- un module de gestion (4) d'au moins une interface (41), et
- au moins une interface (41),
- optionnellement, une mémoire électronique locale (5).

11. Système d'aide à la conduite (10) selon la revendication 9 ou 10, **caractérisé en ce que** les éléments (2, 3, 4, 5) matériels et/ou logiciels comprennent en outre un module de prédiction de situation (31) configuré pour prédire la situation de conduite pour différents horizons de temps.

12. Véhicule automobile **caractérisé en ce qu'**il comprend un système d'aide à la conduite (10) selon l'une des revendications 9 à 11.

13. Produit programme d'ordinateur comprenant des instructions de code de programme enregistrées sur un support lisible par ordinateur pour mettre en œuvre les étapes du procédé selon l'une quelconque des revendications 1 à 8 lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé selon l'une quelconque des revendications 1 à 8.

14. Support d'enregistrement de données, lisible par un ordinateur, sur lequel est enregistré un programme d'ordinateur comprenant des instructions de code de programme de mise en œuvre du procédé selon l'une des revendications 1 à 8 ou support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 8.

15. Signal d'un support de données, portant le produit programme d'ordinateur selon la revendication 13.
